# EUROPÄISCHE PATENTSCHRIFT

(11) **EP 1 674 497 B1**
(45) Veröffentlichungstag und Bekanntmachung des Hinweises auf die Patenterteilung: **13.08.2008**
(21) Anmeldenummer: 05110112.9
(22) Anmeldetag: 28.10.2005
(51) Int. Cl.: C08G 65/40, C08J 5/00, B22F 3/10, B29C 67/00

(54) **Verwendung von Polyarylenetherketonpulver in einem dreidimensionalen pulverbasierenden werkzeuglosen Herstellverfahren, sowie daraus hergestellte Formteile**
Use of polyarylene ether ketone powder in a powder-based tridimensional tool-less method of manufacturing and shaped articles obtained therefrom
Utilisation d'une poudre de polyarylèneéthercétone dans un procédé de fabrication tridimensionnel à base de poudre n'impliquant pas d'outil et les pièces moulées ainsi produites

(30) Priorität: 21.12.2004 DE 102004062761
(43) Veröffentlichungstag der Anmeldung: 28.06.2006
(73) Patentinhaber: Evonik Degussa GmbH, 45128 Essen (DE)
(72) Erfinder: Monsheimer, Sylvia Dr., 45721, Haltern am See (DE); Grebe, Maik, 44805, Bochum (DE); Richter, Alexander Dr., 45657, Recklinghausen (DE); Kreidler, Patrick, 45663, Recklinghausen (DE)

(56) Entgegenhaltungen:
- EP-A- 0 001 879
- DE-A1-2102004 020 45
- US-A- 5 925 688
- US-A- 6 067 480
- US-A- 6 136 948
- US-A1- 2005 207 931

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Die Verfahren sind aber auch für die Herstellung von Kleinserien geeignet.

Die Erfindung betrifft die Verwendung eines porösen Polyarylenetherketon (PAEK) mit einer BET-Oberfläche zwischen 1 und 60 m²/g, bevorzugt zwischen 5 und 45 m²/g, besonders bevorzugt zwischen 15 und 40 m²/g, das zu einem Pulver vermahlen wird, sowie Modifizierungen dieses Pulvers, die Verwendung desselben in einem schichtweise arbeitenden Verfahren, mit welchem selektiv Bereiche einer pulverförmigen Schicht durch Eintrag elektromagnetischer Energie aufgeschmolzen werden, sowie Formkörper, hergestellt durch ein oben genanntes Verfahren.

Das poröse PAEK wird in der Regel hergestellt durch Umsetzung einer aromatischen Dihalogenverbindung mit einem Bisphenol und/oder eines Halogenphenols in Gegenwart von Alkali- oder Erdalkalicarbonat oder ―hydrogencarbonat in einem hochsiedenden aprotischen Lösemittel zu einem PAEK, Austragen und Erstarrenlassen der Schmelze, gegebenenfalls Mahlen, z. B. in einer Hammermühle, Extrahieren der entstandenen Partikel mit einem oder mehreren organischen Lösemitteln zwecks Entfernung des Reaktionslösemittels sowie mit Wasser zwecks Entfernung der anorganischen Salze, und anschließendes Trocknen. Die zu extrahierenden Partikel können aus dem Reaktionsgemisch außer durch Mahlen auch durch Granulieren eines extrudierten Strangs, Tropfenauftrag auf ein gekühltes Metallband, Prillen oder Sprühtrocknen hergestellt werden. Der Grad der nach der Extraktion erhaltenen Porosität hängt insbesondere vom Gehalt an Reaktionslösemittel im zu extrahierenden Gut ab. Insofern ist es vorteilhaft, beim Sprühtrocknen nur einen Teil des Reaktionslösemittels zu entfernen. Ansonsten ist die Art, wie die zu extrahierenden Partikel erzeugt werden, unkritisch.

Das Herstellverfahren von PAEK mit anschließender Extraktion ist in einer großen Anzahl von Patentanmeldungen beschrieben, beispielsweise EP-A-0 001 879, EP-A-0 182 648, EP-A-0 244 167 und EP-A-0 322 151.

Im Rahmen der Erfindung kann jedoch auch ein PAEK, das eventuell nach einem anderen Verfahren hergestellt wurde und das in kompakter Form vorliegt, z. B. als Granulat, in einem geeigneten hochsiedenden aprotischen Lösemittel aufgelöst werden, worauf die heiße Lösung, so wie oben für die bei der Reaktion erhaltene Schmelze beschrieben, in Partikelform überführt und mit einem oder mehreren organischen Lösemitteln extrahiert wird.

Das hochsiedende aprotische Lösemittel ist gemäß dem Stand der Technik vorzugsweise eine Verbindung der Formel 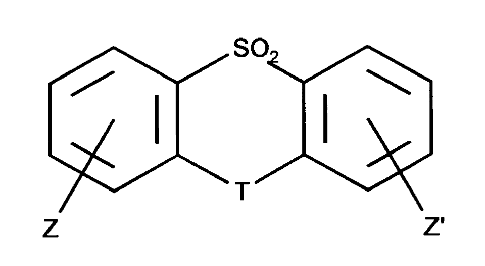 wobei T eine direkte Bindung, ein Sauerstoffatom oder zwei Wasserstoffatome darstellt; Z und Z' sind Wasserstoff oder Phenylgruppen. Bevorzugt handelt es sich hier um Diphenylsulfon.

Das PAEK enthält Einheiten der Formeln

(-Ar-X-)

und

(-Ar'-Y-),

wobei Ar und Ar' einen zweiwertigen aromatischen Rest darstellen, vorzugsweise 1,4-Phenylen, 4,4'-Biphenylen sowie 1,4- 1,5- oder 2,6-Naphthylen. X ist eine elektronenziehende Gruppe, bevorzugt Carbonyl oder Sulfonyl, während Y eine Gruppe wie O, S, CH₂, Isopropyliden oder dergleichen darstellt. Hierbei sollten mindestens 50 %, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausfixhrungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

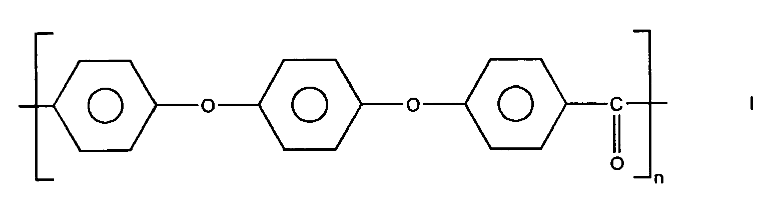

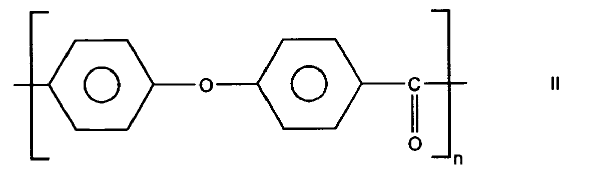

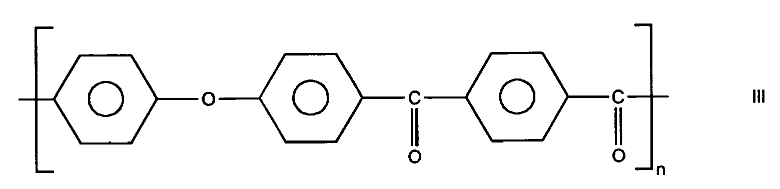

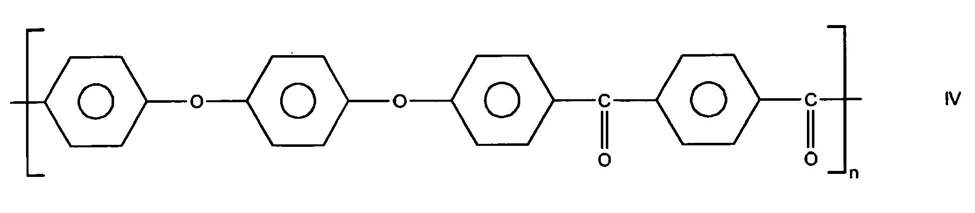

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Jedoch ist die Lehre der Erfindung auch auf amorphe PAEK anwendbar. Im Allgemeinen gilt, dass Sulfonylgruppen, Biphenylengruppen, Naphthylengruppen oder sperrige Gruppen Y, wie z. B. eine Isopropylidengruppe, die Kristallinität verringern.

In einer bevorzugten Ausführungsform beträgt die Viskositätszahl, gemessen entsprechend DIN EN ISO 307 an einer Lösung von 250 mg PAEK in 50 ml 96-gewichtsprozentiger H₂SO₄ bei 25 °C, etwa 20 bis 150 cm³/g und bevorzugt 50 bis 120 cm³/g.

Die BET-Oberfläche wird gemäß DIN ISO 66131 bestimmt.

Das poröse PAEK kann bei Raumtemperatur oder erhöhter Temperatur vermahlen werden, jedoch ist es zur Verbesserung der Vermahlung und der Mahlausbeute vorteilhaft, bei tieferer Temperatur zu vermahlen, bevorzugt unterhalb von 0 °C, besonders bevorzugt unterhalb von -20 °C und insbesondere bevorzugt unterhalb von -40 °C. Zum Vermahlen eignen sich unter anderem Stiftrnühlen, Fließbettgegenstrahlmühlen oder Pralltellermühlen. Hierbei sorgt die poröse Struktur des zu mahlenden PAEK für Schwachstellen, die unter den obengenannten Bedingungen zum Bruch führen.

Das Mahlgut kann nachträglich gesichtet oder gesiebt werden. Je nach eingesetztem Mahlgut und anschließendem Trennverfahren kann ein feinpulvriges für das erfindungsgemäße Verfahren einsetzbare PAEK mit einem zahlenmittleren Partikeldurchmesser (d₅₀) von 30 bis 150 µm, bevorzugt von 45 bis 120 µm, besonders bevorzugt von 48 bis 100 µm hergestellt werden.

Die Bestimmung der Teilchendurchmesser und deren Verteilung erfolgt durch Laserbeugung nach DIN ISO 13320-1.

Zur Herstellung der erfmdungsgemäßen Formteile sind Verfahren besonders geeignet, die auf der Basis von pulverförmigen thermoplastischen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft ein Verfahren zur Verwendung eines Pulvers auf Basis von PAEK sowie Formkörper, hergestellt durch ein schichtweise arbeitendes Verfahren, mit welchem selektiv Bereiche einer Schicht durch Eintrag elektromagnetischer Energie aufgeschmolzen werden, unter Verwendung dieses Pulvers. Die aufgeschmolzenen Bereiche verfestigen sich beim Abkühlen und bilden dabei den gewünschten Formkörper. Überschüssiges Pulvermaterial wird entfernt.

Ein Verfahren, welches besonders gut für den Zweck des Rapid-Prototyping bzw. Rapid-Manufacturing geeignet ist, ist das Laser-Sintern. Bei diesem Verfahren werden Kunststoffpulver in einer Kammer selektiv kurz mit einem Laserstrahl belichtet, wodurch die Pulverpartikel, die von dem Laserstrahl getroffen werden, schmelzen. Die geschmolzenen Partikel laufen ineinander und erstarren nach dem Abkühlen wieder zu einer festen Masse. Durch wiederholtes Belichten von immer neu aufgebrachten Schichten können mit diesem Verfahren komplexe dreidimensionale Körper einfach und schnell hergestellt werden.

Neben dem Lasersintern gibt es jedoch eine Reihe weiterer geeigneter Verfahren. Die Selektivität der schichtweise arbeitenden Verfahren kann dabei über die Auftragung von Suszeptoren, Absorber, Inhibitoren, oder durch Masken, oder über fokussierte Energieeinbringung, wie beispielsweise durch einen Laserstrahl oder durch ein Glasfaserkabel erfolgen.

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie Polyacetat, Polypropylen, Polyethylen, Ionomere und Polyamid 11.

Beim Lasersinterprozess entsteht ein blockartiger Körper, der zum einen aus den gewünschten Bauteilen besteht, zum anderen und meist überwiegenden Teil aus nicht belichtetem Pulver, sogenanntem Rückpulver, welches bis zum Entformen bzw. Auspacken mit den Bauteilen in diesem Block verbleibt. Es hat eine stützende Wirkung auf die Bauteile, so dass Überhänge und Hinterschnitte mit dem Lasersinterverfahren ohne Stützkonstruktionen realisierbar sind. Je nach Art des verwendeten Pulvers kann das nicht belichtete Pulver nach Sieben und Zugabe von Neupulver in einem weiteren Bauprozess eingesetzt werden (Recycling).

Andere gut geeignete Verfahren sind das SIV-Verfahren wie es in WO 01/38061 beschrieben, oder ein Verfahren wie inEP1015214 beschrieben. Beide Verfahren arbeiten mit einer Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht. Weitere geeignete Verfahren sind solche, die mit einem Absorber arbeiten, der entweder im Pulver enthalten ist, oder der per Inkjet-Verfahren aufgetragen wird wie in DE 102004012682.8, DE 102004012683.6 und DE 102004020452.7. beschrieben. Dabei kann zur Einwirkung der elektromagnetischen Energie eine große Bandbreite an Lasern verwendet werden, aber auch eine flächige Einwirkung der elektromagnetischen Energie ist geeignet.

In "Selective Laser Sintering of Nylon 12-Peek Blends formed by cryogenic mechanical alloying", von J. P. Schultz, J. P. Martin, R. G. Kander, veröffentlicht in den Solid Freeform Fabrication Proceedings 2000, Seiten 119-124, wird ein Blend aus Nylon 12 und PEEK beschrieben, welches einen mechanischen Blendprozeß bei tiefen Temperaturen beschreibt, wobei beide Komponenten in Pulverform vorliegen. Dabei wird bereits die Schwierigkeit, deutlich, ein dichtes Bauteil per Lasersintern mit dem Blend zu erzeugen.

Nachteilig beim Stand der Technik ist, dass ein hochwärmeformbeständiges Material für die Verwendung in einem dreidimensionalen Verfahren, bei welchem schichtweise aufgetragenes pulverförmiges Material selektiv mit Hilfe von elektromagnetischen Wellen aufgeschmolzen wird und nach dem Abkühlen die gewünschte dreidimensionale Struktur bildet, bisher nicht kommerziell zur Verfügung stand. Die Ursache liegt zum einen in der Schwierigkeit, ein ausreichend feines Pulver zu erzeugen. Ausreichend fein heißt, dass der gewünschte Auflösungsgrad der Bauteile erreicht wird, und gleichzeitig die Schichtdicke gering genug ist, dass die selektiv eingebrachte Energie ausreicht, um das Aufschmelzen einer Schicht zu gewährleisten. Als Beispiel für den mittleren Korndurchmesser eines Pulvers zur Verwendung in einem der beschriebenen Verfahren kann der Bereich von 30 bis 150 µm genannt werden. Ausbeuten bei der Vermahlung von weniger als 10 % sind in der Regel nicht als kommerziell nutzbare Lösung anzusehen. Zum anderen liegen die Temperaturen, bei denen speziell die hochwärmeformständigen Materialien verarbeitet werden, sehr hoch und sind daher schwierig bis gar nicht in den am Markt befindlichen Rapid-Prototyping/Rapid-Manufacturing-Maschinen zu verarbeiten. Neben den hohen Schmelztemperaturen liegt die Ursache auch in den sehr niedrigen BET-Oberflächen eines PAEK-Pulvers nach dem Stand der Technik, die zu einer verschlechterten Energieaufnahme des aufzuschmelzenden Partikels führen.

Überraschend wurde nun, wie in den Ansprüchen beschrieben, gefunden, dass ein Pulver, wie oben beschrieben, sich als Basismaterial zum Einsatz in den beschriebenen dreidimensionalen Verfahren einsetzen läßt. Die mit diesem Pulver hergestellten Teile weisen eine höhere mechanische Festigkeit und höhere Wärmeformbeständigkeit auf als Bauteile aus beispielsweise dem zur Zeit erhältlichen Standardmaterial EOSINT P2200 (Anbieter EOS GmbH, Krailling, Deutschland) oder Duraform (Anbieter 3D-Systems, Valencia, Californien) für Lasersintern. Bevorzugt wird das Material bezüglich der Kornverteilung optimiert und mit einer Rieselhilfe nach dem Stand der Technik ausgerüstet eingesetzt. Auch eine Nachverrundung der durch den Mahlprozeß scharfkantig ausgeprägten Partikel durch mechanische Einwirkung beispielsweise in einem schnelllaufenden Mischer kann vorteilhaft sein. Besonders bevorzugt ist die Ausrüstung der aufzuschmelzenden Pulverbereiche mit einem IR-Absorber, der beispielsweise im Pulver bereits enthalten sein kann oder während der Verarbeitung durch Auftrag des Absorbers per Inkjet-Verfahren oder Streu- oder Sprühverfahren auf die aufzuschmelzenden Bereiche erfolgt.

Basismaterial ist ein Mahlpulver auf der Basis von PAEK (Polyarylenetherketon). Es ist gekennzeichnet durch die Vermahlung von PAEK-Partikeln, die eine BET-Oberfläche von mindestens 1 m²/g aufweisen. Bevorzugt kann es sich dabei um PEEK, PEK, PEKK, oder PEEKK handeln. Der mittlere Korndurchmesser d50 für die Verwendung in einem dreidimensionalen Verfahren, welches auf der Basis von pulverförmigen thermoplastischen Werkstoffen arbeitet, und bei dem schichtweise durch selektives Aufschmelzen und Verfestigen die gewünschten Strukturen hergestellt werden, liegt zwischen 30 und 150 µm, bevorzugt zwischen 45 und 120 µm, und ganz besonders bevorzugt zwischen 48 und 100 µm. Zur besseren Verarbeitbarkeit auf einer Rapid-Prototyping/Rapid-Manufacturing-Anlage kann der Anteil an Partikeln kleiner als 30 µm beispielsweise durch Sichten reduziert werden. Ebenso kann es sinnvoll sein, Partikel, die größer oder nur wenig kleiner sind als die in dem Verfahren eingestellte Schichtdicke, zum Beispiel mit Hilfe einer Siebung zu entfernen. Die Kornverteilung des im RP/RM-Verfahren verwendeten erfindungsgemäßen Pulvers kann dabei eng, breit, oder auch bimodal sein.

Das PAEK-Pulver, welches als Basis für die vorliegende Erfindung dient, weist eine BET-Oberfläche zwischen 1 m²/g und 60 m²/g auf, bevorzugt zwischen 5 m²/g und 45 m²/g, und besonders bevorzugt zwischen 15 m²/g und 40 m²/g. Die große Oberfläche führt zu einer besseren und gleichmäßigeren Aufnahme der elektromagnetischen Energie, die zum selektiven Aufschmelzen von Bereichen einer Pulverschicht benötigt wird. Im Umkehrschluß bedeutet das, dass bei der Verwendung erfindungsgemäßen Pulvers mit geringerer Energie gearbeitet werden kann, und die Bauteile durch den geringeren Energieeintrag weniger Wärmeleitung in umgebende Bereiche zeigen und damit maßgenauer sind. Insbesondere die Problematik der "runden Ecken" bzw. des Wachsens von Bauteilen in Bereichen hohen Wärmeeintrags wird weitgehend vermieden. Mit PAEK-Pulvern nach dem Stand der Technik, die BET-Oberflächen von weniger als 1 m²/g aufweisen, wird dieser Effekt nicht erreicht. Der Kristallitschmelzpunkt des erfindungsgemäßen Pulvers hängt vom verwendetem Typ des PAEK ab; er liegt oberhalb von 300 °C.

Weiterhin erfordert es die Verarbeitung in einer Rapid-Prototyping/Rapid-Manufacturing- Anlage, zwecks automatisierter Pulverzuführung, Dosierung und Auftrag einer dünnen Pulverschicht, dass die verwendeten Pulver ausreichend rieselfähig sind. Dazu empfiehlt es sich, Rieselhilfe nach dem Stand der Technik, beispielsweise pyrogenes Siliciumdioxid, beizugeben. Typische Mengen an Rieselhilfe bewegen sich zwischen 0,01 und 10 %, bezogen auf das in der Komposition enthaltene Polymer.

Um auf der einen Seite eine ausreichende Fließfähigkeit des selektiv durch die elektromagnetische Energie aufgeschmolzenen PAEK zu gewährleisten, damit gegebenenfalls eine Verbindung zur darunterliegenden Schicht erzielt wird und möglichst lunkerfreie Bauteile erstellt werden können, sowie auf der anderen Seite eine gute mechanische Festigkeit der Bauteile zu erreichen, liegt der bevorzugte Bereich für die Lösungsviskosität zwischen 0,2 und 1,3, besonders bevorzugt zwischen 0,5 und 1,1. Die Lösungsviskosität am PAEK wird dabei nach EN ISO 1628-1 bzw. in Anlehnung an DIN EN ISO 307 in 96%iger Schwefelsäure ermittelt. Desweiteren ist es von Vorteil, wenn das Molekulargewicht während des Verarbeitungsprozesses in einer Rapid-Prototyping/Rapid-Manufacturing-Anlage zumindest erhalten bleibt, als besonders bevorzugt ist ein Anstieg des Molekulargewichtes einzustufen.

Eine weitere vorteilhafte Modifizierung des PAEK-Pulvers besteht in der Einarbeitung eines geeigneten Absorbers. Der Absorber kann entweder gleichmäßig im Partikel verteilt sein, sich im Inneren oder oberflächennah konzentrieren.

Bei dem Absorber, besonders IR-Absorber, kann es sich um Farbmittel oder andere Zusatzstoffe handeln. Beispiele dafür sind Ruß, KHP (Kupferhydroxidphosphat), Knochenkohle, Flammschutzmittel auf Basis Melamincyanurat oder Phosphor, Kohlenstofffasern, Kreide, Graphit oder für vornehmlich transparente Pulver z.B. Interferenzpigmente und ClearWeld® (WO 0238677), ohne die Erfindung darauf beschränken zu wollen. Die Modifizierung des PAEK-Pulvers kann auf die verschiedenste Art und Weise erfolgen.
Daher ist ebenso Gegenstand der vorliegenden Erfindung ein Verfahren zur Modifizierung von PAEK-Pulver , welches dadurch gekennzeichnet ist, dass entweder eine pulverförmige Mischung des erfindungsgemäßen PAEK-Pulvers und eines entsprechenden Absorbers hergestellt wird.

Das erfmdungsgemäße Pulver weist bezogen auf die Summe der im Pulver vorhandenen Polymere vorzugsweise von 0,01 bis 30 Massen-% an einem Absorber, bevorzugt von 0,05 bis 20 Massen-% eines Absorbers, besonders bevorzugt von 0,2 bis 15 Massen-% eines Absorbers und ganz besonders bevorzugt von 0,4 bis 10 Massen-% eines Absorbers, auf. Die angegebenen Bereiche beziehen sich dabei auf den Gesamtgehalt eines durch elektromagnetische Energie anregbaren Absorbers im Pulver, wobei mit Pulver die gesamte aus Komponenten bestehende Menge gemeint ist.
Das erfindungsgemäße Pulver kann eine Mischung eines Absorbers und Polymerpartikeln aufweisen oder aber Polymerpartikel bzw. -pulver, welche eingearbeiteten Absorber aufweisen. Bei einem Anteil des Absorbers von unter 0,01 Massen-% bezogen auf die gesamte aus Komponenten bestehende Menge nimmt der gewünschte Effekt der verbesserten Aufschmelzbarkeit der gesamten Komposition durch elektromagnetische Wellen deutlich ab. Bei einem Anteil des Absorbers von über 30 Massen-% bezogen auf die gesamte aus Komponenten bestehende Menge verschlechtern sich die mechanischen Eigenschaften wie z.B. die Reißdehnung der aus solchen Pulvern hergestellten Formkörper deutlich und die Verarbeitbarkeit leidet.
Der Absorber weist vorzugsweise eine Partikelgröße auf, die die mittlere Korngröße d₅₀ der Polymerpartikel bzw. -pulver um mindestens 20 %, vorzugsweise um mehr als 50 % und ganz besonders bevorzugt um mehr als 70 % unterschreiten. Insbesondere weist der Absorber eine mittlere Partikelgröße von 0,001 bis 50 µm, bevorzugt von 0,02 bis 10 µm auf. Durch die geringe Partikelgröße kommt es zu einer guten Verteilung des pulverförmigen Absorbers in dem pulverförmigen Polymerpulver.

Im einfachsten Fall weist der Absorber ein sogenanntes Farbmittel auf. Unter einem Farbmittel versteht man alle farbgebenden Stoffe nach DIN 55944, welche in anorganische und organische Farbmittel sowie in natürliche und synthetische Farbmittel einteilbar sind (s. Römpps Chemielexikon, 1981, 8. Auflage, S 1237). Nach DIN 55943 (Sept. 1984) und DIN 55945 (Aug. 1983) ist ein Pigment ein im Anwendungsmedium praktisch unlösliches, anorganisches oder organisches, buntes oder unbuntes Farbmittel. Farbstoffe sind in Lösemitteln und/oder Bindemitteln lösliche anorganische oder organische, bunte oder unbunte Farbmittel.
Der Absorber kann aber auch seine absorbierende Wirkung dadurch erhalten, dass er Zusatzstoffe aufweist. Das können beispielsweise Flammschutzmittel auf der Basis von Melamincyanurat sein (Melapur von der DSM), oder auf der Basis von Phosphor, bevorzugt Phosphate, Phosphite, Phosphonite, oder elementarer roter Phosphor. Ebenfalls als Zusatzstoff geeignet sind Kohlenstofffasern, bevorzugt gemahlen, Glaskugeln, auch hohl, oder Kaolin, Kreide, Wollastonit, oder Graphit.

Der im erfindungsgemäßen Pulver enthaltene Absorber weist bevorzugt Ruß oder KHP (Kupferhydroxidphoshat) oder Kreide, Knochenkohle, Kohlenstofffasern, Graphit, Flammschutzmittel oder Interferenzpigmente als Hauptkomponente auf. Interferenzpigmente sind sogenannte Perlglanzpigmente. Auf Basis von dem natürlichen Mineral Glimmer werden sie mit einer dünnen Schicht aus Metalloxiden, zum Beispiel Titandioxid und/oder Eisenoxid umhüllt und stehen mit einer mittleren Korngrößenverteilung zwischen 1 und 60 µm zur Verfügung. Interferenzpigmente werden beispielsweise von der Fa. Merck unter dem Namen Iriodin angeboten. Die Iriodinpalette von Merck umfasst Perlglanzpigmente und metalloxidbeschichtete Glimmerpigmente sowie die Unterklassen: Interferenzpigmente, Metallglanz-Effektpigmente (Eisenoxidbeschichtung des Glimmerkerns), Silberweiß-Effektpigmente, Goldglanzeffektpigmente(mit Titandioxid und Eisenoxid beschichteter Glimmerkern). Besonders bevorzugt ist die Verwendung von Iriodintypen der Iriodin-LS-Reihe, namentlich Iriodin LS 820, Iriodin LS 825, Iriodin LS 830, Iriodin LS 835 und Iriodin LS 850. Ganz besonders bevorzugt ist die Verwendung von Iriodin LS 820 und Iriodin LS 825.

Daneben eignen sich ebenfalls: Glimmer bzw. Glimmerpigmente, Titandioxid, Kaolin, organische und anorganische Farbpigmente, Antimon(III)oxid, Metallpigmente, Pigmente auf der Basis von Bismutoxichlorid (z. B. Serie Biflair von Merck, Hochglanzpigment), Indiumzinnoxid (Nano ITO-Pulver, von Nanogate Technologies GmbH oder AdNano^{tm} ITO der Degussa), AdNano^{tm} Zinkoxid (Degussa), Lantanhexachlorid, ClearWeld® (WO 0238677) sowie kommerziell erhältliche Flammschutzmittel, welche Melamincyanurat oder Phosphor, bevorzugt Phosphate, Phosphite, Phosphonite oder elementaren (roter) Phosphor, aufweisen.

Wenn eine Störung der Eigenfarbe des Pulvers vermieden werden soll, weist der Absorber bevorzugt Interferenzpigmente, besonders bevorzugt aus der Iriodin LS-Reihe von Merck, oder Clearweld®, aus.

Die chemische Bezeichnung für das KHP ist Kupferhydroxidphosphat; dieses wird als hellgrünes, feines kristallines Pulver mit einem mittleren Korndurchmesser von knapp 3 µm eingesetzt.

Der Ruß kann nach dem Furnacerußverfahren, dem Gasrußverfahren oder dem Flammrußverfahren hergestellt werden, vorzugsweise nach dem Furnacerußverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt zwischen 10 und 600 m²/g, bevorzugt zwischen 70 und 400 m²/g. Die Rußpartikel können zur Einstellung von Oberflächenfunktionalitäten oxidativ nachbehandelt sein. Sie können hydrophob (beispielsweise Printex 55 oder Flammruß 101 der Degussa) oder hydrophil (beispielsweise Farbruß FW20 oder Printex 150 T der Degussa) eingestellt sein. Sie können hochstrukturiert oder niederstrukturiert sein; damit wird ein Aggregationsgrad der Primärteilchen beschrieben. Durch die Verwendung spezieller Leitfähigkeitsruße kann die elektrische Leitfähigkeit der aus dem erfindungsgemäßen Pulver hergestellten Bauteile eingestellt werden. Durch die Verwendung von geperlten Rußen kann eine bessere Dispergierbarkeit sowohl bei den nassen als auch bei den trockenen Mischverfahren genutzt werden. Auch die Verwendung von Rußdispersionen kann von Vorteil sein.

Knochenkohle ist ein mineralisches Schwarzpigment, welches elementaren Kohlenstoff enthält. Sie besteht zu 70 bis 90 % aus Calciumphosphat und zu 30 bis 10 % aus Kohlenstoff. Die Dichte liegt typischerweise zwischen 2,3 und 2,8 g/ml.

Der Absorber kann auch eine Mischung von organischen und/oder anorganischen Pigmenten, Flammschutzmitteln, oder anderen Farbmitteln enthalten, die jedes für sich elektromagnetische Wellen schlecht absorbieren, in der Kombination jedoch ausreichend gut zur Verwendung im erfindungsgemäßen Verfahren die eingetragene elektromagnetische Energie absorbieren.
Der Absorber kann beispielsweise als Granulat, oder als Pulver vorliegen. Je nach Herstellverfahren des für das erfindungsgemäße Verfahren geeigneten Pulvers können sie vermahlen oder nachgemahlen werden. Falls die Verwendung einer Dispersion für das Herstellverfahren von Vorteil ist, so kann der Absorber entweder bereits als Dispersion vorliegen, oder aus feinteiligen Absorberpartikeln eine Dispersion hergestellt werden. Der Absorber kann auch als Flüssigkeit vorliegen. Als Beispiel hierfür sei ClearWeld® genannt.
Solche Additive, die hier als Absorber verwendet werden, sind beispielsweise bei der Firma Merck unter dem Namen Iriodin® erhältlich. Mit Ruß sind handelsübliche Standardruße gemeint, wie sie beispielsweise von den Firmen Degussa AG, Cabot Corp., oder Continental Carbon angeboten werden.

Kommerziell erhältliche Beispiele für geeignete Absorber im allgemeinen sind Iriodin® LS 820 oder Iriodin® LS 825 oder Iriodin® LS 850 der Firma Merck. Als Beispiel für den Ruß mag Printex 60, Printex A, Printex XE2, oder Printex Alpha der Firma Degussa dienen. Geeignetes KHP wird ebenfalls von der Firma Degussa unter dem Markennamen Vestodur FP-LAS angeboten.

Erfindungsgemäßes Pulver kann außerdem zumindest einen Hilfsstoff, zumindest einen Füllstoff und/oder zumindest ein Pigment aufweisen. Solche Hilfsstoffe können z.B. Rieselhilfsmittel, wie z.B. pyrogenes Siliziumdioxid oder auch gefällte Kieselsäure sein. Pyrogenes Siliziumdioxid (pyrogene Kieselsäure) wird zum Beispiel unter dem Produktnamen Aerosil®, mit unterschiedlichen Spezifikationen, durch die Degussa AG angeboten. Vorzugsweise weist erfindungsgemäßes Pulver weniger als 3 Massen-%, vorzugsweise von 0,001 bis 2 Massen-% und ganz besonders bevorzugt von 0,05 bis 1 Massen-% solcher Pigmente bezogen auf Gesamtsumme der Komponenten, also der Summe aus Polymeren und Absorber auf. Die Füllstoffe können z.B. Glas-, Metall-, insbesondere Aluminium- oder Keramikpartikel, wie z.B. massive oder hohle Glaskugeln, Stahlkugeln, Aluminiumkugeln oder Metallgrieß oder auch Buntpigmente, wie z.B. Übergangsmetalloxide sein.

Die Füllstoffpartikel weisen dabei vorzugsweise eine kleinere oder ungefähr gleich große mittlere Korngröße wie die Partikel der Polymere oder die mit Polymer umhüllten Partikel auf. Vorzugsweise sollte die mittlere Korngröße d₅₀ der Füllstoffe die mittlere Korngröße d₅₀ der Polymere um nicht mehr als 20 %, vorzugsweise um nicht mehr als 15 % und ganz besonders bevorzugt um nicht mehr als 5 % unterschreiten. Die Partikelgröße ist insbesondere limitiert durch die zulässige Bauhöhe bzw. Schichtdicke in der jeweils verwendeten schichtweise arbeitenden Apparatur.

Vorzugsweise weist erfindungsgemäßes Pulver weniger als 75 Massen-%, bevorzugt von 0,001 bis 70 Massen-%, besonders bevorzugt von 0,05 bis 50 Massen-% und ganz besonders bevorzugt von 0,5 bis 25 Massen-% solcher Füllstoffe bezogen auf die Gesamtsumme der Komponenten auf, so dass der Volumenanteil der Polymere in jedem Fall größer 50 % beträgt. Falls es sich um gecoatete Partikel handelt, kann der Volumenanteil der Polymere auch kleiner als 50 % sein.
Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Pulver hergestellt wurden.

Die Herstellung der erfindungsgemäßen Pulver ist einfach möglich und erfolgt bevorzugt gemäß dem erfindungsgemäßen Verfahren zur Herstellung von erfindungsgemäßem Pulver, welches sich dadurch auszeichnet, dass ein PAEK-Pulver hergestellt wird, gegebenenfalls die entstandene Kornfraktion oder Kornform für den Einsatz im RP/RM-Verfahren angepaßt wird, weiterhin gegebenenfalls anschließend mit Hilfs- und Zusatzstoffen versehen wird, und im Bedarfsfalle mit einem Absorber versetzt wird. Die optimale Reihenfolge der auf das Basismaterial angewandten Modifikationen soll durch die Aufzählung nicht vorweggenommen sein. Die Hilfs- und Zusatzstoffe bzw. der Absorber können im Dry Blend eingebracht werden.
Dabei kann es von Vorteil sein, bei der Verwendung eines pulverförmigen Absorbers den Absorber zunächst allein oder aber auch die fertige Mischung mit einer Rieselhilfe zu versehen, beispielsweise aus der Aerosil-Reihe von Degussa, z. B. Aerosil R972 oder R812 oder Aerosil 200.

Das Pulver kann bei dieser Variante des erfindungsgemäßen Verfahrens ein bereits für Rapid-Prototyping/Rapid-Manufacturing-Verfahren geeignetes PAEK-Pulver sein, dem einfach feinteilige Partikel des Absorbers zugemischt werden. Die Partikel weisen dabei vorzugsweise eine kleinere bis maximal ungefähr gleich große mittlere Korngröße wie die Polymer aufweisenden Partikel auf. Vorzugsweise sollte die mittlere Korngröße d₅₀ des Absorbers die mittlere Korngröße d₅₀ der Polymerpulver um mehr als 20 %, vorzugsweise um mehr als 50 % und ganz besonders bevorzugt um mehr als 70 % unterschreiten. Die Korngröße ist nach oben hin insbesondere limitiert durch die zulässige Bauhöhe bzw. Schichtdicke in der Rapid-Prototyping/Rapid-Manufacturing-Anlage. Insbesondere weist der Absorber eine mittlere Partikelgröße von 0,001 bis 50 µm, bevorzugt von 0,02 bis 10 µm auf.

Insbesondere durch die Verwendung von PAEK-Pulvern, welche sich durch eine hohe BET-Oberfläche auszeichnen, ist eine sehr gute Verteilung des Absorbers gegeben. Aus eigenen Untersuchungen ist bekannt, dass Pigmente, die auf einer relativ glatten Oberfläche von Partikeln mit einer BET-Oberfläche unterhalb von 1 m²/g verteilt sind, zu einem starken Abfall der mechanischen Eigenschaften an den damit hergestellten Bauteilen führen. Insbesondere die Reißdehnung leidet unter den Sollbruchstellen, die die Pigmentkonzentration auf der Oberfläche darstellt. Überraschenderweise wurde nun gefunden, dass die hohe BET-Oberfläche zu einer guten Verteilung des Absorbers führt, und dass damit Bauteile mit höherer Dichte und besseren mechanischen Eigenschaften, insbesondere Reißdehnung, hergestellt werden können wenn erfindungsgemäßes PAEK-Pulver in einem der weiter oben beschriebenen Verfahren verwendet wird.

Gegebenenfalls kann zur Verbesserung des Rieselverhaltens dem erfindungsgemäßen Pulver eine geeignete Rieselhilfe, wie pyrogenes Aluminiumoxid, pyrogenes Siliziumdioxid oder pyrogenes Titandioxid, dem gefällten oder gemahlenen Pulver äußerlich zugesetzt werden.

Eine feinteilige Vermischung kann in der einfachsten Ausführungsart des erfindungsgemäßen Verfahrens beispielsweise durch Aufmischen fein gepulverten Absorbers auf das trockene Pulver in schnelllaufenden mechanischen Mischern erfolgen.

Als Absorber können handelsübliche Produkte, die beispielsweise bei der Fa. Merck oder Degussa unter dem Handelsnamen Iriodin® oder Printex® bezogen werden können, bzw. die oben beschriebenen eingesetzt werden.

Zur Verbesserung der Verarbeitungsfähigkeit oder zur weiteren Modifikation des Pulvers können diesem anorganische Pigmente, insbesondere Buntpigmente, wie z.B. Übergangsmetalloxide, Stabilisatoren, wie z.B. Phenole, insbesondere sterisch gehinderte Phenole, Verlaufs- und Rieselhilfsmittel, wie z.B. pyrogene Kieselsäuren sowie Füllstoffpartikel zugegeben werden. Vorzugsweise wird, bezogen auf das Gesamtgewicht an Komponenten im Pulver, soviel dieser Stoffe den Pulvern zugegeben, dass die für das erfindungsgemäße Pulver angegeben Konzentrationen für Füll- und/oder Hilfsstoffe eingehalten werden.

Außerdem kann es vorteilhaft sein, wenn als Pulver eine Mischung hergestellt wird, die neben den PAEK-Partikeln auch diverse Füllstoffe wie z. B. Glaspartikel, Keramikpartikel oder Metallpartikel aufweisen, oder weitere Additive wie beispielsweise Flammschutzmittel. Typische Füllstoffe sind z. B. Metallgrieße, beispielsweise Alugrieß, oder Stahl- oder Glaskugeln.

Die Füllstoffpartikel weisen dabei vorzugsweise eine kleinere oder ungefähr gleich große mittlere Partikelgröße wie die PAEK aufweisenden Partikel auf. Vorzugsweise sollte die mittlere Partikelgröße d₅₀ der Füllstoffe die mittlere Partikelgröße d₅₀ der PAEK aufweisenden Partikel um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in einer wie für oben beschriebene Verfahren (RP/RM-Verfahren) geeignete RP/RM-Apparatur. Typischerweise werden Glaskugeln mit einem mittleren Durchmesser von 20 bis 80 µm verwendet. Ein weiterer Vorzugsbereich sind liegt bei durchschnittlichen Partikelgrößen für die Füllstoffe bzw. Additive unterhalb von 20 µm, bevorzugt unterhalb 15 µm.

Gegenstand der vorliegenden Erfindung ist auch die Verwendung von erfindungsgemäßem Pulver zur Herstellung von Formkörpern in einem schichtweise arbeitenden und selektiv das Pulver aufschmelzenden (Rapid-Prototyping- oder Rapid-Manufacturing-) Verfahren, bei denen erfindungsgemäße Pulver, die zusätzlich wie beschrieben modifiziert sein können und/oder einen Absorber aufweisen können, eingesetzt werden.

Insbesondere ist Gegenstand der vorliegenden Erfindung die Verwendung des erfindungsgemäßen PAEK-Pulvers, welches zusätzlich wie beschrieben modifiziert sein kann und/oder einen Absorber aufweisen kann, zur Herstellung von Formkörpern durch selektives Lasersintern.

Die Laser-Sinter-Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, verschmolzen werden. Durch die aufeinanderfolgende Versinterung von Schichten von Polymerpartikeln werden dreidimensionale Objekte hergestellt. Einzelheiten zum Verfahren des selektiven Laser-Sinterns sind z.B. den Schriften US 6,136,948 und WO 96/06881 zu entnehmen. Die Wellenlänge des üblicherweise verwendeten CO₂-Lasers beträgt dabei 10600 nm. Das erfmdungsgemäße Pulver kann, insbesondere wenn es einen Absorber aufweist, aber auch in Verfahren, welches Laser mit einer Wellenlänge zwischen 100 und 3000 nm, bevorzugt zwischen 800 und 1070 nm oder zwischen 1900 und 2100 nm, verwendet, insbesondere in dem oben beschriebenen, eingesetzt werden. So kann das erfindungsgemäße Pulver insbesondere zur Herstellung von Formkörpern aus Pulvern durch das SLS-Verfahren (selektives Lasersintern) mittels Lasern mit einer Wellenlänge von 10600 nm, und zwischen 100 und 3000 nm, bevorzugt zwischen 800 und 1070 nm oder zwischen 1900 und 2100 nm, verwendet werden.

Laserenergie mit Wellenlängen zwischen 100 und 3000 nm kann meist problemlos in einen Lichtwellenleiter eingekoppelt werden. Das ermöglicht den Verzicht auf aufwendige Spiegelsysteme, wenn dieser Lichtwellenleiter dann flexibel über das Baufeld geführt werden kann. Eine weitere Bündelung des Laserstrahls kann über Linsen oder Spiegel erfolgen. Auch eine Kühlung des Lasers ist nicht in allen Fällen erforderlich.

Zur Vermeidung von Curl, das bedeutet ein Aufrollen der aufgeschmolzenen Bereiche aus der Bauebene heraus, ist es sinnvoll, den Bauraum zu heizen. Bevorzugt wird auf eine Temperatur knapp unterhalb der Schmelzetemperatur des Polymeren aufgeheizt. Die Verarbeitungsparameter können durch entsprechende Vorversuche je nach Verfahren leicht herausgefunden werden. Für die erfindungsgemäßen PAEK-Pulver ist es vorteilhaft, die zum Aufschmelzen benötigte Energie schonend einzubringen.

Die erfindungsgemäßen Formkörper, hergestellt durch ein Verfahren zum schichtweisen Aufbau von dreidimensionalen Gegenständen, bei dem selektiv Bereiche einer Pulverschicht, insbesondere des erfindungsgemäßen Pulvers, durch die Einwirkung elektromagnetischer Wellen aufgeschmolzen werden, wie z.B. dem selektiven Laser-Sintern, zeichnen sich dadurch aus, dass sie PAEK aufweisen. Besonders bevorzugt weisen sie ein PEEK, PEK, PEKK, oder ein PEEKK auf.

Der gegebenenfalls im erfindungsgemäßen Formkörper vorhandene Absorber kann beispielsweise ein sogenanntes Farbmittel aufweisen. Unter einem Farbmittel versteht man alle farbgebenden Stoffe nach DIN 55944, welche in anorganische und organische Farbmittel sowie in natürliche und synthetische Farbmittel einteilbar sind (s. Römpps Chemielexikon, 1981, 8. Auflage, S 1237). Nach DIN 55943 (Sept. 1984) und DIN 55945 (Aug. 1983) ist ein Pigment ein im Anwendungsmedium praktisch unlösliches, anorganisches oder organisches, buntes oder unbuntes Farbmittel. Farbstoffe sind in Lösemitteln und/oder Bindemitteln lösliche anorganische oder organische, bunte oder unbunte Farbmittel.

Der im erfindungsgemäßen Formkörper gegebenenfalls vorhandene Absorber kann aber auch seine absorbierende Wirkung dadurch erhalten, dass er Zusatzstoffe aufweist. Das können beispielsweise Flammschutzmittel auf der Basis von Melamincyanurat sein (Melapur von der DSM), oder auf der Basis von Phosphor, bevorzugt Phosphate, Phosphite, Phosphonite, oder elementarer roter Phosphor. Ebenfalls als Zusatzstoff geeignet sind Kohlenstofffasern, bevorzugt gemahlen, Glaskugeln, auch hohl, oder Kaolin, Kreide, Wollastonit, oder Graphit.

Der gegebenenfalls im erfindungsgemäßen Formkörper vorhandene Absorber weist bevorzugt Ruß oder KHP (Kupferhydroxidphoshat) oder Kreide, Knochenkohle, Kohlenstofffasern, Graphit, Flammschutzmittel oder Interferenzpigmente als Hauptkomponente auf. Interferenzpigmente sind sogenannte Perlglanzpigmente. Auf Basis von dem natürlichen Mineral Glimmer werden sie mit einer dünnen Schicht aus Metalloxiden, zum Beispiel Titandioxid und/oder Eisenoxid umhüllt und stehen mit einer mittleren Korngrößenverteilung zwischen 1 und 60 µm zur Verfügung. Interferenzpigmente werden beispielsweise von der Fa. Merck unter dem Namen Iriodin angeboten. Die Iriodinpalette von Merck umfasst Perlglanzpigmente und metalloxidbeschichtete Glimmerpigmente sowie die Unterklassen: Interferenzpigmente, Metallglanz-Effektpigmente (Eisenoxidbeschichtung des Glimmerkerns), Silberweiß-Effektpigmente, Goldglanzeffektpigmente (mit Titandioxid und Eisenoxid beschichteter Glimmerkern). Besonders bevorzugt ist die Verwendung von Iriodintypen der Iriodin-LS-Reihe, namentlich Iriodin LS 820, Iriodin LS 825, Iriodin LS 830, Iriodin LS 835 und Iriodin LS 850. Ganz besonders bevorzugt ist die Verwendung von Iriodin LS 820 und Iriodin LS 825.

Der im erfmdungsgemäßen Formkörper gegebenenfalls vorhandene Absorber kann beispielsweise Glimmer bzw. Glimmerpigmente, Titandioxid, Kaolin, organische und anorganische Farbpigmente, Antimon(111)oxid, Metallpigmente, Pigmente auf der Basis von Bismutoxichlorid (z. B. Serie Biflair von Merck, Hochglanzpigment), Indiumzinnoxid (Nano ITO-Pulver, von Nanogate Technologies GmbH oder AdNano^{tm} ITO der Degussa), AdNano^{tm} Zinkoxid (Degussa), Lantanhexachlorid, ClearWeld® (WO 0238677) sowie kommerziell erhältliche Flammschutzmittel, welche Melamincyanurat oder Phosphor, bevorzugt Phosphate, Phosphite, Phosphonite oder elementaren (roter) Phosphor, aufweisen.

Vorzugsweise weist der erfindungsgemäße Formkörper, bezogen auf die Summe der im Formkörper vorhandenen Komponenten, von 0,01 bis 30 Massen-% an Absorber, bevorzugt von 0,05 bis 20 Massen-%, besonders bevorzugt von 0,2 bis 15 Massen-% und ganz besonders bevorzugt von 0,4 bis 10 Massen-% auf. Maximal beträgt der Anteil an Absorber 50 Massen-% bezogen auf die Summe der im Formkörper vorhandenen Komponenten.

Die Formkörper können neben Polymer und Absorber außerdem Füllstoffe und/oder Hilfsstoffe und/oder Pigmente, wie z.B. thermische Stabilisatoren und/oder Oxidationsstabilisatoren wie z.B. sterisch gehinderte Phenolderivate aufweisen. Füllstoffe können z.B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Massen-% und ganz besonders bevorzugt von 0,05 bis 1 Massen-% solcher Hilfsstoffe bezogen auf die Summe der vorhandenen Komponenten auf. Ebenso bevorzugt weisen erfmdungsgemäße Formkörper weniger als 75 Massen-%, bevorzugt von 0,001 bis 70 Massen-%, besonders bevorzugt von 0,05 bis 50 Massen-% und ganz besonders bevorzugt von 0,5 bis 25 Massen-% solcher Füllstoffe bezogen auf die Summe der vorhandenen Komponenten auf.

Anwendungsgebiete für diese Formkörper sind sowohl im Rapid Prototyping als auch im Rapid Manufacturing zu sehen. Mit Letzterem sind durchaus Kleinserien gemeint, also die Herstellung von mehr als einem gleichen Teil, bei dem aber die Produktion mittels eines Spritzgießwerkzeug nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfmdungsgemäßen Teile gehen, können beispielsweise die Luft- und Raumfahrtindustrie sein, die Medizintechnik, der Maschinenbau, der Automobilbau, die Sportindustrie, die Haushaltswarenindustrie, Elektroindustrie und Lifestyle.

Die in den nachfolgenden Beispielen durchgeführte Bestimmung der BET-Oberfläche erfolgte nach DIN 66 131. Die Schüttdichte wurde mit einer Apparatur gemäß DIN 53 466 ermittelt. Die Messwerte der Laserbeugung wurden an einem Malvern Mastersizer S, Ver. 2.18 erhalten.

### Beispiele:

### Herstellung des erfindungsgemäßen PEEK-Pulvers, Beispiel 1:

Partikel aus PEEK mit einer BET-Oberfläche von 50 m²/g und einem mittleren Korndurchmesser von 500 µm wurden mit Hilfe einer cryogen arbeitenden Stiftmühle (Hosokawa Alpine CW 160) gemahlen. Dabei wurden die PEEK-Partikel über eine Förderschnecke in einen Mahlraum gefördert und währenddessen mit flüssigem Stickstoff auf -50 °C heruntergekühlt. In diesem Mahlraum wurden die PEEK-Partikel durch rotierende Stiftscheiben auf 220 m/s beschleunigt. Mit dieser Geschwindigkeit prallten sie auf die auf den Stiftscheiben angebrachten Stifte und wurden so einer starken Prallbeanspruchung ausgesetzt, die zum Bruch der Partikel führte. Dies geschah mit einem Durchsatz an PEEK-Partikeln von 15 kg/h. Den Mahlraum verließ ein micronisiertes Produkt mit einem Anteil von Partikeln kleiner als 100 µm von 30 Gew.-% (Siebanalyse mit Alpine Luftstrahlsieb nach DIN EN ISO 4610).

Nach dem Micronisieren schloss sich der Prozessschnitt des Separierens an. Dabei wurden die zerkleinerten PEEK-Partikel mit Hilfe eines Alpine Luftstrahlsiebes mit nachgeschaltetem Zyklon fraktioniert. Die Fraktionierung erfolgte bei einer Maschenweite von 80 µm. Das so erhaltene Pulver war charakterisiert durch einen d₁₀ von 16,7 µm, d₅₀ von 52,6 µm und d₉₀ von 113,8 µm.

### Beispiel 2: PEEK-Pulver mit Rieselhilfe

Zu 1900 g (100 Teile) PEEK-Pulver, hergestellt gemäß Beispiel 1, mit einem mittleren Korndurchmesser d₅₀ von 52,6µm (Laserbeugung) wird 3,8 g Aerosil 200 (0,2 Teile) im Dry-Blend-Verfahren unter Benutzung eines Henschelmischers FML10/KM23 bei Raumtemperatur und 500 U/min in 3 Minuten untergemischt. An dem konfektionierten Pulver wurde eine Schüttdichte gemäß DIN 53 466 von 493 g/l gemessen. Die BET-Oberfläche beträgt 22,3 m²/g.

### Beispiel 3: PEEK-Pulver mit Iriodin® LS 825

Zu 1900 g (100 Teile) PEEK-Pulver, hergestellt gemäß Beispiel 1, mit einem mittleren Korndurchmesser d₅₀ von 52,6µm (Laserbeugung) wird 19 g (1 Teil) Iriodin® LS 825 im Dry-Blend-Verfahren unter Benutzung eines Henschelmischers FML10/KM23 bei 500 U/min bei 40 °C in 2 Minuten gemischt. Anschließend wurden 3,8 g Aerosil 200 (0,2 Teile) bei Raumtemperatur und 500 U/min in 3 Minuten untergemischt. An dem konfektionierten Pulver wurde eine Schüttdichte gemäß DIN 53 466 von 471 g/l gemessen. Die BET-Oberfläche beträgt 22,3 m²/g.

### Beispiel 4: PEEK-Pulver mit Printex Alpha

Zu 1900 g (100 Teile) PEEK-Pulver, hergestellt gemäß Beispiel 1 mit einem mittleren Korndurchmesser d₅₀ von 52,6 µm (Laserbeugung) wird 47 g (2,5 Teile) Printex alpha im Dry-Blend-Verfahren unter Benutzung eines Henschelmischers FML10/KM23 bei 700 U/min bei 50 °C in 2 Minuten gemischt. Anschließend wurden 1,0 g Aerosil R812 (0,05 Teile) bei Raumtemperatur und 500 U/min in 2 Minuten untergemischt. An dem konfektionierten Pulver wurde eine Schüttdichte gemäß DIN 53 466 von 450 g/l gemessen. Die BET-Oberfläche beträgt 22,3 m²/g.

### Beispiel 5: PEEK-Pulver Victrex 450 G gemahlen (nicht erfindungsgemäß)

Verkaufsprodukt von Victrex; das Granulat wurde auf einer Stiftrnühle der Firma Hosokawa Alpine CW 160 vermahlen. Die Temperatur betrug dabei -65 °C, trotzdem blieb die Ausbeute bei ca. 3 %. Die BET-Oberfläche des Ausgangsgranulates beträgt weniger als 0,1 m²/g.
Nach einer Schutzsiebung bei 120 µm wurden 2,0 g Aerosil 200 (0,1 Teile) bei Raumtemperatur und 500 U/min in 2 Minuten untergemischt. Der mittlere Korndurchmesser wurde mittels Laserbeugung mit 98 µm bestimmt. An dem konfektionierten Pulver wurde eine Schüttdichte gemäß DIN 53 466 von 499 g/l gemessen. Die BET-Oberfläche des Pulvers beträgt weniger als 0,1 g m²/g.

### Beispiel 6: Verarbeitung in einer Apparatur mit Nd:YAG-Laser

Ein 10x10 cm oben offener Kasten wurde mit einem Boden versehen, der über eine Spindel verfahrbar ist. Der Boden wurde bis auf einen halben Zentimeter an die obere Kante bewegt; der verbliebene Raum wurde mit Pulver gefüllt und mit einer Metallplatte glattgestrichen. Die Apparatur wurde in den Bauraum eines Nd:YAG-Lasers Star Mark 65 (Hersteller Carl Basel Lasertechnik) gestellt. Es wurde eine 4 mm breite und 20 mm lange Fläche durch den Laser aufgeschmolzen.
Die nächsten Schritte, Drehung der Spindel zum Absenken des Bodens um 0,15 mm sowie Auftrag der nächsten Pulverschicht, glattstreichen, und anschließend erneutes Belichten der 4 mm breiten und 20 mm langen Fläche durch den Nd:YAG-Laser zum Aufschmelzen des Pulvers, wurden einige Male wiederholt.

Das nicht mit Absorber versetzte Pulver aus den Beispielen 2 und 5 schmolz schlecht auf. Mit den Pulvern aus den Beispielen 3 und 4 konnten jedoch Plättchen mit der gewünschten Kontur hergestellt werden.
Besonders die Temperaturführung war jedoch noch zu optimieren, da durch das nicht automatisierte Handling und den Auftrag kalten Absorbers Curl auftrat.

### Beispiel 7: Verarbeitung in einer EOSINT P 360

Die Pulver aus den Beispielen 2-5 wurden in der Lasersintermaschine des Herstellers EOS GmbH, Krailling, in Deutschland, getestet. Gearbeitet wurde mit der maximal möglichen Bauraumtemperatur von ca. 200 °C.
Das Pulver aus Beispiel 5 hatte kein Verarbeitungsfenster. Obwohl die maximal mögliche Energie eingebracht wurde, entstand kein glatter Schmelzefilm, sondern eine pickelige Oberfläche, auf der die einzelnen Körner noch zu erkennen waren. Eine zweite Schicht konnte nicht aufgetragen werden, da an den Kanten des Films starker Curl auftrat, das heißt ein Aufrollen der Kanten aus der Bauebene heraus. Bei Steigerung der Laserleistung in Richtung Maximalwert für den 50-Watt-Laser entstanden Aschepartikel, die sich auf der Bauplattform absetzten.
Das Pulver aus Beispiel 2 ließ sich verarbeiten, jedoch entstand ein Plättchen, welches relativ viele Lunker aufwies, was sich in der niedrigen Dichte niederschlug.
Die Pulver aus den Beispielen 3 und 4 ließen sich verarbeiten und erzeugten wesentlich dichtere Bauteile als das Pulver aus Beispiel 2.

| | Dichte [g/l] |
|---|---|
| Bauteil aus Pulver aus Beispiel 2 | 0,91 |
| Bauteil aus Pulver aus Beispiel 3 | 1,1 |
| Bauteil aus Pulver aus Beispiel 4 | 1,21 |

Die Wärmeformbeständigkeiten der Bauteile aus den Beispielen 3 und 4 betrug nach DIN 53461, HDTB 218 bzw 221 °C. Ein lasergesintertes Bauteil aus dem Standardmaterial EOSINT P2200 GF hat eine Wärmeformbeständigkeit von 140 °C.

## Patentansprüche

1. Polymerpulver zur Verwendung in einem schichtweise arbeitenden Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver Polyarylenetherketon aufweist und eine BET-Oberfläche zwischen 1 und 60 m²/g hat.

2. Polymerpulver zur Verwendung in einem schichtweise arbeitenden Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver Polyarylenetherketon aufweist und eine BET-Oberfläche zwischen 5 und 45 m²/g hat.

3. Polymerpulver zur Verwendung in einem schichtweise arbeitenden Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver Polyarylenetherketon aufweist und eine BET-Oberfläche zwischen 15 und 40 m²/g hat.

4. Polymerpulver zumindest einem der Ansprüche 1 bis 3,
**dadurch gekennzeichnet,**
**dass** das Pulver zumindest ein Polymer aus der Gruppe Polyetheretherketon, Polyetherketon, Polyetherketonketon oder Polyetheretherketonketon aufweist.

5. Polymerpulver nach zumindest einem der Ansprüche 1 bis 4,
**dadurch gekennzeichnet,**
**dass** das Pulver einen mittleren Korndurchmesser zwischen 30 und 150 µm aufweist.

6. Polymerpulver nach zumindest einem der Ansprüche 1 bis 5,
**dadurch gekennzeichnet,**
**dass** das Pulver einen mittleren Korndurchmesser zwischen 45 und 120 µm aufweist.

7. Polymerpulver nach zumindest einem der Ansprüche 1 bis 6,
**dadurch gekennzeichnet,**
**dass** das Pulver einen mittleren Korndurchmesser zwischen 48 und 100 µm aufweist.

8. Polymerpulver nach zumindest einem der Ansprüche 1 bis 4,
**dadurch gekennzeichnet,**
**dass** das Pulver eine Lösungsviskosität in 96%iger Schwefelsäure nach EN ISO 1628-1 bzw. in Anlehnung an DIN EN ISO 307 zwischen 0,2 und 1,3 aufweist.

9. Polymerpulver nach zumindest einem der Ansprüche 1 bis 4,
**dadurch gekennzeichnet,**
**dass** das Pulver eine Lösungsviskosität in 96%iger Schwefelsäure nach EN ISO 1628-1 bzw. in Anlehnung an DIN EN ISO 307 zwischen 0,5 und 1,1 aufweist.

10. Pulver nach zumindest einem der Ansprüche 1 bis 9,
**dadurch gekennzeichnet,**
**dass** es zusätzlich zumindest einen Hilfsstoff und/oder zumindest einen Füllstoff und/oder zumindest ein Pigment und/oder zumindest einen Absorber aufweist.

11. Pulver nach Anspruch 10,
**dadurch gekennzeichnet,**
**dass** es als Hilfsstoff Rieselhilfsmittel aufweist.

12. Pulver nach Anspruch 10,
**dadurch gekennzeichnet,**
**dass** der Absorber Farbmittel aufweist.

13. Pulver nach Anspruch 10,
**dadurch gekennzeichnet,**
**dass** der Absorber Farbstoffe aufweist.

14. Pulver nach Anspruch 10,
**dadurch gekennzeichnet,**
**dass** der Absorber Pigmente aufweist.

15. Pulver nach Anspruch 10,
**dadurch gekennzeichnet,**
**dass** der Absorber Ruß, KHP, Knochenkohle, Graphit, Kohlenstofffasern, Kreide oder Interferenzpigmente aufweist.

16. Pulver nach Anspruch 10,
**dadurch gekennzeichnet,**
**dass** der Absorber Flammschutzmittel basierend auf Phosphor oder Melamincyanurat aufweist.

17. Pulver nach Anspruch 10,
**dadurch gekennzeichnet,**
**dass** das Pulver die Absorberkomponente pulverförmig mit einer mittleren Partikelgröße von 0,001 bis 50 µm aufweist.

18. Pulver nach Anspruch 10,
**dadurch gekennzeichnet,**
**dass** das Pulver bezogen auf die Summe der im Pulver vorhandenen Polymere von 0,01 bis 30 Gew.-% Absorber aufweist.

19. Polymerpulver nach Anspruch 10,
**dadurch gekennzeichnet,**
**dass** das Pulver bezogen auf die Summe der im Pulver vorhandenen Polymere von 0,05 bis 20 Gew.-% Absorber aufweist.

20. Polymerpulver nach Anspruch 10,
**dadurch gekennzeichnet,**
**dass** das Pulver bezogen auf die Summe der im Pulver vorhandenen Polymere von 0,2 bis 15 Gew.-% Absorber aufweist.

21. Polymerpulver nach Anspruch 10,
**dadurch gekennzeichnet,**
**dass** das Pulver bezogen auf die Summe der im Pulver vorhandenen Polymere von 0,4 bis 10 Gew.-% Absorber aufweist.

22. Pulver nach Anspruch 15,
**dadurch gekennzeichnet,**
**dass** die Rußpartikel hydrophilisiert sind.

23. Pulver nach Anspruch 15,
**dadurch gekennzeichnet,**
**dass** die Rußpartikel hydrophobisiert sind.

24. Polymerpulver nach Anspruch 10,
**dadurch gekennzeichnet,**
**dass** es als Füllstoff Glaspartikel und/oder Alugrieß aufweist.

25. Schichtweise arbeitendendes Verfahren, bei dem selektiv Bereiche der jeweiligen Pulverschicht durch den Eintrag elektromagnetischer Energie aufgeschmolzen werden,
**dadurch gekennzeichnet,**
**dass** das Pulver Polyarylenetherketon aufweist und eine BET-Oberfläche zwischen 1 und 60 m²/g hat.

26. Verfahren nach Anspruch 25,
**dadurch gekennzeichnet,**
**dass** das Polymerpulver mit Absorber vermischt wird.

27. Verfahren nach Anspruch 25,
**dadurch gekennzeichnet,**
**dass** die Selektivität durch den Auftrag von Inhibitoren, Suszeptoren, Absorbern, oder durch Masken erreicht wird.

28. Verfahren nach Anspruch 25,
**dadurch gekennzeichnet,**
**dass** es zur Herstellung von Formkörpern verwendet wird.

29. Verfahren nach Anspruch 25,
**dadurch gekennzeichnet,**
**dass** eine Infrarotheizung zum Aufschmelzen des Polymerpulvers eingesetzt wird.

30. Verfahren nach Anspruch 25,
**dadurch gekennzeichnet,**
**dass** ein Mikrowellengenerator zum Aufschmelzen des Polymerpulvers eingesetzt wird.

31. Formkörper, hergestellt durch eines der Verfahren nach den Ansprüchen 25 bis 30,
**dadurch gekennzeichnet,**
**dass** er ein Polymer aus der Gruppe Polyarylenetherketon aufweist.

32. Formkörper, hergestellt durch eines der Verfahren nach den Ansprüchen 25 bis 30,
**dadurch gekennzeichnet,**
**dass** er zumindest ein Polymer aus der Gruppe Polyetheretherketon, Polyetherketon, Polyetherketonketon oder Polyetheretherketonketon aufweist.

33. Formkörper, hergestellt durch eines der Verfahren nach den Ansprüchen 25 bis 30,
**dadurch gekennzeichnet,**
**dass** er bezogen auf die Summe der vorhandenen Polymere von 0,01 bis 30 Gew.-% Absorber aufweist.

34. Formkörper, hergestellt durch eines der Verfahren nach den Ansprüchen 25 bis 30,
**dadurch gekennzeichnet,**
**dass** er Farbmittel aufweist.

35. Formkörper, hergestellt durch eines der Verfahren nach den Ansprüchen 25 bis 30,
**dadurch gekennzeichnet,**
**dass** er Farbstoffe aufweist.

36. Formkörper, hergestellt durch eines der Verfahren nach den Ansprüchen 25 bis 30,
**dadurch gekennzeichnet,**
**dass** er Pigmente aufweist.

37. Formkörper, hergestellt durch eines der Verfahren nach den Ansprüchen 25 bis 30,
**dadurch gekennzeichnet,**
**dass** er Ruß, KHP, Knochenkohle, Graphit, Kohlenstofffasern, Kreide oder Interferenzpigmente oder Flammschutzmittel basierend auf Phosphor oder auf Melamincyanurat aufweist.

38. Formkörper, hergestellt durch eines der Verfahren nach den Ansprüchen 25 bis 30,
**dadurch gekennzeichnet,**
**dass** er Füllstoffe und/oder Hilfsstoffe aufweist.

39. Verwendung der Formkörper nach einem der Ansprüche 31 bis 38 in zumindest einem der Anwendungsgebiete der Luft- und Raumfahrtindustrie, im Automobilbau, im Maschinenbau, in der Medizintechnik, in der Sportindustrie, in der Elektronikindustrie, in der Haushaltswarenindustrie oder im Bereich Lifestyle.

## Claims

1. Polymer powder for use in a layer-by-layer process in which regions of the respective powder layer are selectively melted via introduction of electromagnetic energy,
**characterized**
**in that** the powder comprises polyarylene ether ketone and has a BET surface area of from 1 to 60 m²/g.

2. Polymer powder for use in a layer-by-layer process in which regions of the respective powder layer are selectively melted via introduction of electromagnetic energy,
**characterized**
**in that** the powder comprises polyarylene ether ketone and has a BET surface area of from 5 to 45 m²/g.

3. Polymer powder for use in a layer-by-layer process in which regions of the respective powder layer are selectively melted via introduction of electromagnetic energy,
**characterized**
**in that** the powder comprises polyarylene ether ketone and has a BET surface area of from 15 to 40 m²/g.

4. Polymer powder according to at least one of Claims 1 to 3,
**characterized**
**in that** the powder comprises at least one polymer from the group of polyether ether ketone, polyether ketone, polyether ketone ketone, or polyether ether ketone ketone.

5. Polymer powder according to at least one of Claims 1 to 4,
**characterized**
**in that** the powder has a median grain diameter of from 30 to 150 µm.

6. Polymer powder according to at least one of Claims 1 to 5,
**characterized**
**in that** the powder has a median grain diameter of from 45 to 120 µm.

7. Polymer powder according to at least one of Claims 1 to 6,
**characterized**
**in that** the powder has a median grain diameter of from 48 to 100 µm.

8. Polymer powder according to at least one of Claims 1 to 4,
**characterized**
**in that** the powder has a solution viscosity in 96% strength sulfuric acid to EN ISO 1628-1, or based on DIN EN ISO 307, of from 0.2 to 1.3.

9. Polymer powder according to at least one of Claims 1 to 4,
**characterized**
**in that** the powder has a solution viscosity in 96% strength sulfuric acid to EN ISO 1628-1, or based on DIN EN ISO 307, of from 0.5 to 1.1.

10. Powder according to at least one of Claims 1 to 9,
**characterized**
**in that** it also comprises at least one auxiliary and/or at least one filler and/or at least one pigment and/or at least one absorber.

11. Powder according to Claim 10,
**characterized**
**in that** it comprises powder-flow aid as auxiliary.

12. Powder according to Claim 10,
**characterized**
**in that** the absorber comprises colorants.

13. Powder according to Claim 10,
**characterized**
**in that** the absorber comprises dyes.

14. Powder according to Claim 10,
**characterized**
**in that** the absorber comprises pigments.

15. Powder according to Claim 10,
**characterized**
**in that** the absorber comprises carbon black, CHP, animal charcoal, graphite, carbon fibers, chalk, or interference pigments.

16. Powder according to Claim 10,
**characterized**
**in that** the absorber comprises flame retardants based on phosphorus or melamine cyanurate.

17. Powder according to Claim 10,
**characterized**
**in that** the powder comprises the absorber component in powder form with a median particle size of from 0.001 to 50 µm.

18. Polymer powder according to Claim 10,
**characterized**
**in that** the powder comprises, based on the entirety of the polymers present in the powder, from 0.01 to 30% by weight of an absorber.

19. Polymer powder according to Claim 10,
**characterized**
**in that** the powder comprises, based on the entirety of the polymers present in the powder, from 0.05 to 20% by weight of an absorber.

20. Polymer powder according to Claim 10,
**characterized**
**in that** the powder comprises, based on the entirety of the polymers present in the powder, from 0.2 to 15% by weight of an absorber.

21. Polymer powder according to Claim 10,
**characterized**
**in that** the powder comprises, based on the entirety of the polymers present in the powder, from 0.4 to 10% by weight of an absorber.

22. Polymer powder according to Claim 15,
**characterized**
**in that** the carbon black particles have been hydrophilicized.

23. Polymer powder according to Claim 15,
**characterized**
**in that** the carbon black particles have been hydrophobicized.

24. Polymer powder according to Claim 10,
**characterized**
**in that** it comprises granular aluminum and/or glass particles as filler.

25. Layer-by-layer process in which regions of the respective powder layer are selectively melted via introduction of electromagnetic energy,
**characterized**
**in that** the powder comprise polyarylene ether ketone and has a BET surface area of from 1 to 60 m²/g.

26. Process according to Claim 25,
**characterized**
**in that** the polymer powder is mixed with absorber.

27. Process according to Claim 25,
**characterized**
**in** the that the selectivity is achieved via application of inhibitors, of susceptors, or of absorbers, or via masks.

28. Process according to Claim 25,
**characterized**
**in that** it is used for production of moldings.

29. Process according to Claim 25,
**characterized**
**in that** infrared heating is used to melt polymer powder.

30. Process according to Claim 25,
**characterized**
**in that** a microwave generator is used to melt polymer powder.

31. Molding, produced via one of the processes according to Claims 25 to 30,
**characterized**
**in that** it comprises a polymer from the polyarylene ether ketone group.

32. Molding, produced via one of the processes according to Claims 25 to 30,
**characterized**
**in that** it comprises at least one polymer from the group of polyether ether ketone, polyether ketone, polyether ketone ketone, or polyether ether ketone ketone.

33. Molding, produced via one of the processes according to Claims 25 to 30,
**characterized**
**in that** it comprises from 0.01 to 30% by weight of absorber, based on the entirety of the polymers present.

34. Molding, produced via one of the processes according to Claims 25 to 30,
**characterized**
**in that** it comprises colorants.

35. Molding, produced via one of the processes according to Claims 25 to 30,
**characterized**
**in that** it comprises dyes.

36. Molding, produced via one of the processes according to Claims 25 to 30,
**characterized**
**in that** it comprises pigments.

37. Molding, produced via one of the processes according to Claims 25 to 30,
**characterized**
**in that** it comprises carbon black, CHP, animal charcoal, graphite, carbon fibers, chalk, or interference pigments, or flame retardants based on phosphorus or on melamine cyanurate.

38. Molding, produced via one of the processes according to Claims 25 to 30,
**characterized**
**in that** it comprises fillers and/or auxiliaries.

39. Use of the molding according to one of Claims 31 to 38, in at least one of the application sectors of the aerospace industry, in automobile construction, in mechanical engineering, in medical technology, in the sports industry, in the electronics industry, in the household goods industry, or in the lifestyle sector.

## Revendications

1. Poudre de polymère destinée à être utilisée dans un procédé fonctionnant par couches, dans lequel des zones de la couche de poudre respective sont fondues sélectivement par l'apport d'énergie électromagnétique, **caractérisée en ce que** la poudre comporte une polyarylène-éthercétone et présente une surface BET comprise entre 1 et 60 m²/g.

2. Poudre de polymère destinée à être utilisée dans un procédé fonctionnant par couches, dans lequel des zones de la couche de poudre respective sont fondues sélectivement par l'apport d'énergie électromagnétique, **caractérisée en ce que** la poudre comporte une polyarylène-éthercétone et présente une surface BET comprise entre 5 et 45 m²/g.

3. Poudre de polymère destinée à être utilisée dans un procédé fonctionnant par couches, dans lequel des zones de la couche de poudre respective sont fondues sélectivement par l'apport d'énergie électromagnétique, **caractérisée en ce que** la poudre comporte une polyarylène-éthercétone et présente une surface BET comprise entre 15 et 40 m²/g.

4. Poudre de polymère selon au moins l'une des revendications 1 à 3, **caractérisée en ce que** la poudre comporte au moins un polymère choisi dans le groupe constitué par une polyéther-éthercétone, une polyéthercétone, une polyéthercétone-cétone et une polyéther-éthercétone-cétone.

5. Poudre de polymère selon au moins l'une des revendications 1 à 4, **caractérisée en ce que** la poudre présente un diamètre moyen de grain compris entre 30 et 150 µm.

6. Poudre de polymère selon au moins l'une des revendications 1 à 5, **caractérisée en ce que** la poudre présente un diamètre moyen de grain compris entre 45 et 120 µm.

7. Poudre de polymère selon au moins l'une des revendications 1 à 6, **caractérisée en ce que** la poudre présente un diamètre moyen de grain compris entre 48 et 100 µm.

8. Poudre de polymère selon au moins l'une des revendications 1 à 4, **caractérisée en ce que** la poudre présente une viscosité en solution dans de l'acide sulfurique à 96 %, selon ISO 1628-1 ou sur la base de DIN EN ISO 307, comprise entre 0,2 et 1,3.

9. Poudre de polymère selon au moins l'une des revendications 1 à 4, **caractérisée en ce que** la poudre présente une viscosité en solution dans de l'acide sulfurique à 96 %, selon ISO 1628-1 ou sur la base de DIN EN ISO 307, comprise entre 0,5 et 1,1.

10. Poudre selon au moins l'une des revendications 1 à 9, **caractérisée en ce qu'**elle comporte en outre au moins un adjuvant et/ou au moins une charge et/ou au moins un pigment et/ou au moins un absorbant.

11. Poudre selon la revendication 10, **caractérisée en ce qu'**elle comporte en tant qu'adjuvant un agent auxiliaire facilitant l'écoulement.

12. Poudre selon la revendication 10, **caractérisée en ce que** l'absorbant comporte des matières colorantes.

13. Poudre selon la revendication 10, **caractérisée en ce que** l'absorbant comporte des colorants.

14. Poudre selon la revendication 10, **caractérisée en ce que** l'absorbant comporte des pigments.

15. Poudre selon la revendication 10, **caractérisée en ce que** l'absorbant comporte du noir de carbone, du KHP, du noir animal, du graphite, des fibres de carbone, de la craie ou des pigments interférentiels.

16. Poudre selon la revendication 10, **caractérisée en ce que** l'absorbant comporte des agents ignifuges à base de phosphore ou de cyanurate de mélamine.

17. Poudre selon la revendication 10, **caractérisée en ce que** la poudre comporte le composant absorbant sous forme pulvérulente, ayant une taille moyenne de particule de 0,001 à 50 µm.

18. Poudre selon la revendication 10, **caractérisée en ce que** la poudre comporte de 0,01 à 30 % en poids d'absorbant, par rapport à la somme des polymères présents dans la poudre.

19. Poudre de polymère selon la revendication 10, **caractérisée en ce que** la poudre comporte de 0,05 à 20% en poids d'absorbant, par rapport à la somme des polymères présents dans la poudre.

20. Poudre de polymère selon la revendication 10, **caractérisée en ce que** la poudre comporte de 0,2 à 15 % en poids d'absorbant, par rapport à la somme des polymères présents dans la poudre.

21. Poudre de polymère selon la revendication 10, **caractérisée en ce que** la poudre comporte de 0,4 à 10 % en poids d'absorbant, par rapport à la somme des polymères présents dans la poudre.

22. Poudre selon la revendication 15, **caractérisée en ce que** les particules de noir de carbone sont rendues hydrophiles.

23. Poudre selon la revendication 15, **caractérisée en ce que** les particules de noir de carbone sont rendues hydrophobes.

24. Poudre de polymère selon la revendication 10, **caractérisée en ce qu'**elle comporte en tant que charge des particules de verre et/ou de la poudre d'aluminium.

25. Procédé fonctionnant par couches, dans lequel des zones de la couche de poudre respective sont fondues sélectivement par l'apport d'énergie électromagnétique, **caractérisé en ce que** la poudre comporte une polyarylène-éthercétone et présente une surface BET comprise entre 1 et 60 m²/g.

26. Procédé selon la revendication 25, **caractérisé en ce que** la poudre de polymère est mélangée avec un absorbant.

27. Procédé selon la revendication 25, **caractérisé en ce que** la sélectivité est réalisée par application d'inhibiteurs, de suscepteurs, d'absorbants ou au moyen de masques.

28. Procédé selon la revendication 25, **caractérisé en ce qu'**il est utilisé pour la production de corps moulés.

29. Procédé selon la revendication 25, **caractérisé en ce que** pour faire fondre la poudre de polymère on utilise un chauffage infrarouge.

30. Procédé selon la revendication 25, **caractérisé en ce que** pour faire fondre la poudre de polymère on utilise un générateur de micro-ondes.

31. Corps moulé produit par l'un des procédés selon les revendications 25 à 30, **caractérisé en ce qu'**il comporte un polymère choisi dans le groupe des polyarylène-éthercétones.

32. Corps moulé produit par l'un des procédés selon les revendications 25 à 30, **caractérisé en ce qu'**il comporte au moins un polymère choisi dans le groupe constitué par une polyéther-éthercétone, une polyéthercétone, une polyéthercétone-cétone et une polyéther-éthercétone-cétone.

33. Corps moulé produit par l'un des procédés selon les revendications 25 à 30, **caractérisé en ce qu'**il comporte de 0,01 à 30 % en poids d'absorbant, par rapport à la somme des polymères présents.

34. Corps moulé produit par l'un des procédés selon les revendications 25 à 30, **caractérisé en ce qu'**il comporte des matières colorantes.

35. Corps moulé produit par l'un des procédés selon les revendications 25 à 30, **caractérisé en ce qu'**il comporte des colorants.

36. Corps moulé produit par l'un des procédés selon les revendications 25 à 30, **caractérisé en ce qu'**il comporte des pigments.

37. Corps moulé produit par l'un des procédés selon les revendications 25 à 30, **caractérisé en ce qu'**il comporte du noir de carbone, du KHP, du noir animal, du graphite, des fibres de carbone, de la craie ou des pigments interférentiels ou des agents ignifuges à base de phosphore ou de cyanurate de mélamine.

38. Corps moulé produit par l'un des procédés selon les revendications 25 à 30, **caractérisé en ce qu'**il comporte des charges et/ou des adjuvants.

39. Utilisation des corps moulés conformes à l'une quelconque des revendications 31 à 38, dans au moins l'un des domaines d'utilisation de l'industrie aérospatiale, dans la construction d'automobiles, dans la construction de machines, en technique médicale, dans l'industrie du sport, dans l'industrie de l'électronique, dans l'industrie des articles ménagers ou dans le domaine de la décoration.
